# EUROPEAN PATENT APPLICATION

(11) **EP 2 930 300 A1**
(43) Date of publication of application: **14.10.2015**
(21) Application number: 14163740.5
(22) Date of filing: 07.04.2014
(51) Int. Cl.: E21B 41/00, F16K 17/16

(54) **Canister with improved pressure relief**

(71) Applicant: Siemens Aktiengesellschaft, 80333 München (DE)
(72) Inventor: Boe, Ove, 7549 Tanem (NO)

(57) **Abstract**

The present invention relates to a subsea canister (10) comprising a disk (40) connected to a canister housing (20, 20', 20") in such a way that an inner disk surface (42) faces an interior space of the canister and outer disk surface (43) faces a space outside the canister and a support element (30, 30') fixedly connected to the canister housing (20, 20', 20"), wherein the disk is supported in the canister housing via the support element (30, 30'). Furthermore, the subsea canister (10) comprises a diaphragm (60) located on the outer disk surface (43), wherein the diaphragm is located on the outer disk surface (43) in such a way that the diaphragm (60) covers the disk wherein the diaphragm (60) and the support element (30, 30') are made of metal and the diaphragm is attached to the support element in such a way that a fully metallic seal is provided between the diaphragm (60) and the support element (30, 30').

## Description

### Technical Field

The present invention relates to a subsea canister.

### Background

For subsea applications, for example subsea oil production or similar applications, subsea energy transmission and subsea telecommunications equipment to be operated subsea has to be adapted to this harsh environment. A major obstacle in deep water is the extreme high pressure experienced by the equipment at these depths. Accordingly, pressure vessels, socalled pressure canisters are used to protect equipment at these depths from high pressure by providing an inside pressure of approximately one atmosphere corresponding to 100000 pascal or one bar. In the event that a pressure canister leaks slowly while subsea and is then withdrawn back to the surface, it may contain a pressure higher than the normal atmospheric pressure. When the pressure canister has been withdrawn back from a depth of approximately 3000 metres to the surface, the pressure inside the canister may still be extremely high, for example as high as 300 bar (30 millions Pa), as in case of a leakage in the canister, the canister may be filled with fluid compressing the internal gas up to the same pressure as the ambient sea water. If the leakage path is not sufficiently large to release the pressure within the time the canister has reached the surface, the above-described residual pressure of several hundred bars may be present inside the canister. As the canisters are mainly designed to withstand a high external and not a high internal pressure, this represents a danger for health, safety and/or the environment.

Accordingly, a need exists to provide a subsea canister which can minimize the above-mentioned problems and can provide a canister which will not maintain a high internal pressure when the canister has reached the surface again.

### Summary

This need is met by the feature of the independent claim. Further embodiments are described in the dependent claims.

A subsea canister is provided comprising a disk connected to a canister housing in such a way that an inner disk surface faces an interior space of the canister and an outer disk surface faces a space outside the canister. Furthermore, a support element is provided which is fixedly connected to the canister housing wherein the disk is supported in the canister housing via the support element. A diaphragm is located on the outer disk surface and the diaphragm is located on the other disk surface in such a way that the diaphragm covers the disk. Furthermore the diaphragm and the support element are made of metal and the diaphragm is attached to the support element in such a way that a fully metallic seal is provided between the diaphragm and the support element.

The combination of the disk and the diaphragm can withstand high external pressures as the diaphragm is located on the outer disk surface. However in case of a high internal pressure due to a leakage, the diaphragm will be lifted off the canister as will be explained in more detail below. In one embodiment, the disk may be loosely supported on the support element and in case of a high internal pressure, the disk may be expelled from the support element, the diaphragm being expelled together with the disk. As a consequence, the high internal pressure will be relieved.

Furthermore it is possible that the disk comprises at least one through-hole through which the interior space of the canister is connected to the space outside the canister, wherein the diaphragm is located on the other disk surface in such a way that the diaphragm covers at least one through-hole in the disk. In this case, in case of a high internal pressure inside the canister, the diaphragm will be lifted off the disk and will be exposed to the full differential pressure between the pressure inside the canister and the ambient pressure of the canister when the canister is withdrawn back to the surface. This will cause the diaphragm to burst and the internal pressure will be relieved. The disk will be either expelled further forcing the burst of the diaphragm or the disk is fixedly connected to the support element so that only the diaphragm will burst in response to the high internal pressure transmitted to the diaphragm through the through-hole(s). As the diaphragm, in subsea applications, will only be exposed to the pressure in the relatively small area of the through-hole or through-holes in the disk, it can nevertheless withstand a high external pressure.

The diaphragm can be located on the upper disk surface in such a way that the diaphragm rests on the disk. If a pressure in the space outside the canister is larger than the one inside the canister, the diaphragm is pressed onto the upper surface of the disk. This helps to assure that the diaphragm closes the at least one through-hole in the disk surface.

Preferably, the area in the disk in which through-holes are provided is small relative to the upper surface of the disk. By way of example, the through-hole or though-holes provided in the disk may have a diameter between 0.5 and 3 millimetres, preferably between 1 and 2 millimetres. The through-holes can have a circular shape, however, another shape as such as an oval or rectangular shape is possible. When the diaphragm with its planar lower surface is pressed onto the upper surface of the disk with through-hole(s) of this size, the diaphragm can withstand high external pressures such as 300 bar.

The disk and diaphragm may be designed in such a way that the disk can withstand a pressure difference between the inner disk surface and the outer disk surface without breaking that is at least ten times higher than the pressure difference the diaphragm can withstand between its lower surface and its upper surface without breaking. Preferably, it can be 30 times higher, 50 times higher or even 100 times higher. When the disk can withstand an external outer pressure of about 300 bar without breaking, the diaphragm may be designed in such a way that if the pressure originating from the canister inside to the lower surface of the diaphragm through the through-hole, compared to the outside pressure, is larger than a value between 2 and 10 bar, the diaphragm may burst so that the internal pressure will be relieved.

In order to avoid that water or any other material is entering the canister at the location where the support element and the disk are provided, the support element and the housing may be made of metal and the support element can be attached to the housing in such a way that a fully metallic seal is provided between the support element and the housing of the canister. In another embodiment, the support element comprises a threaded part cooperating with a complementary threaded part provided at the housing to connect the support element to the housing of the canister.

As far as the disk is concerned, the disk may be fixedly connected to the support element, e.g. via welding. In another embodiment, the disk is loosely supported on the support element in such a way that if the pressure in the interior space of the canister is smaller than the space outside the canister, the disk is pressed onto the support element. If the pressure in the interior space of the canister is larger than the space outside the canister and if the pressure difference between the pressure in the interior space and the space outside the canister is larger than a threshold, the disk is expelled from the support element. In this embodiment the disk may comprise through-holes or not. When the disk is expelled from the support element, it can be easily seen from the outside that a higher internal pressure had existed, but that this internal pressure is relieved as the disk is expelled from the support element.

The disk and the diaphragm may be made of the same material, e.g. stainless steel. The disk may have a thickness that is between 8 to 20 times higher than the thickness of the diaphragm. This relationship between the thickness of the disk and the thickness of the diaphragm helps to assure that the canister can withstand high outside pressures, but that the diaphragm breaks or is expelled from its position when the internal pressure is higher than the external pressure.

It is furthermore possible that a protective cover is arranged above the surface of the diaphragm that is not facing the support element. This protective cover can help to protect the upper surface of the diaphragm. Furthermore, it is possible that the diaphragm has a varying thickness wherein parts of the diaphragm that cover the at least through-hole have a greater thickness than other parts of the diaphragm.

### Brief description of the drawings

The invention will be described with further detail in reference to the accompanying drawings.
Fig. 1 is a schematic partial sectional view of a canister housing including a disk and a diaphragm which help to avoid that high internal pressures are maintained in the canister.
Fig. 2 is a partial sectional view of the canister of Fig. 1 in a slightly different embodiment including an additional protective cover.
Fig. 3 is a partial sectional view of the canister in another embodiment including a disk and a diaphragm.

In the following, exemplary embodiments of the invention will be described in more detail. It should be understood that the features of the different embodiments described below or mentioned above may be combined with each of the other features unless specifically noted otherwise. Same reference signs in the various drawings refer to similar or identical components.

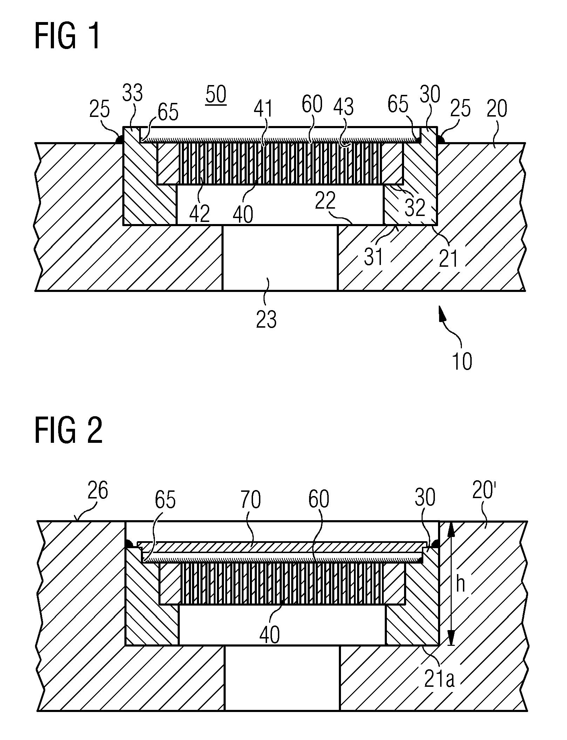

Fig. 1 partially shows a canister 10 including a canister housing 20. The subsea canister can be used for housing components in its interior space for protecting the components from high pressure present in subsea applications. It should be understood that the canister can be used in other fields of application where high external pressures outside the canister exist. The canister housing 20 comprises a stepped portion 21 providing a seat on which a support element 30 is located. The support element 30 is located on the stepped portion 21 in such a way that the lower surface 31 of the support element is located on a planar surface 22 of the canister housing. This support element 30 may be fixedly connected to the canister housing 20 using a sealing weld 25. The support element also comprises a stepped portion 32 providing a seat and support for a disk 40 comprising at least one through-hole 41. In the embodiment shown, several through-holes are shown. However, it should be understood that a smaller number of through-holes may be used. It is enough that single through-hole is provided, the through-hole 41 connecting the interior space 23 of the canister to the space 50 outside the canister. A diaphragm 60 is placed on the disk in such a way that the diaphragm covers the upper surface of the disk and especially covers the area of the through-holes provided in the disk. The through-hole(s) can have a diameter smaller than 1 mm, or smaller than 3 mm, or smaller than 5 mm. The diaphragm may be connected to the support element via a sealing weld 65.

In the embodiment shown in Fig. 1 the support element, a circumferential ridge 33 is provided. Inside this ridge the diaphragm 60 can be placed on the upper surface of the disk and the part of the upper surface of the support element. The upper surface of the support element where the diaphragm is located is flush with the upper surface of the disk so that the planar surface is obtained on which the diaphragm 60 rests. In a subsea application, high pressure in the space 50 outside the canister is present compared to the interior space 23 of the canister. When the surface upon which the diaphragm is located is planar, the diaphragm is pressed onto the upper surface of the disk and on part of the surface of the support element.

The sealing welds 25 and 65 help to completely seal the interior space 23 from the space 50 outside the canister 10.

The canister housing 20, the support element 30 and the diaphragm 60 and the disk 40 can be made of metal, e.g. stainless steel. The canister housing may be dimensioned such that it can withstand high external pressures up to 300 bar. When the canister has a small leakage, the surrounding water may slowly penetrate the interior space 23 of the canister. The existing air, be it nitrogen or any other composition, is compressed accordingly. The water inside the canister and the high pressure can destroy the components inside the canister so that it becomes necessary to exchange or repair the canister. When the canister is retrieved from the subsea location, the outside pressure will slowly diminish. When the pressure inside the canister becomes larger than the pressure outside, the material inside the canister, be it the water or the gas, will exert a pressure on the lower surface of the diaphragm 60 through the through-holes 41. The disk 40 has an inner disk surface 42 facing the interior space 23 of the canister and an outer disk surface 43 facing the space 50 outside the canister. The disk may have a thickness that is more than 5 times, more than 10 times, or even more than 20 times higher than the thickness of the diaphragm. When a certain pressure difference between the interior space 23 and the space outside 50 is obtained, the diaphragm 60 may break as the internal pressure is fed to the lower surface of the diaphragm through the at least one through-hole 41. By way of example, the diaphragm may break when the internal pressure is 1 to 10 bar higher than the external pressure.

In another embodiment not shown in Fig. 1, the disk does not contain through-holes. In this embodiment, the disk is not fixedly connected to the support element 30, but is only supported by the support element. In case of a high external pressure, the disk is pressed to the support element. The sealing of this embodiment is achieved by the fully metallic seal between the diaphragm 60 and the support element 30. When no through-holes are provided, a high internal pressure cannot escape through the through-holes but the whole disk 40 is expelled from the support element together with the diaphragm. In such a case the fact that a leakage and a high internal pressure had been present is even more visible from the outside as the diaphragm and the disk were expelled from the housing.

Fig. 2 shows a slightly different embodiment wherein the support element 30, the disk 40 and the diaphragm 60 corresponds to the embodiment of Fig. 1. In the embodiment shown in Fig. 2, the stepped portion 21a of housing 20' has a larger height h so that the support element 30 does not extend over the upper surface 26 of the canister housing. In the embodiment of Fig. 2, a protective cover 70 is provided above the diaphragm so that it covers the upper surface of the diaphragm. From the inside to the outside of the canister the disk is located below the diaphragm 60 and the protective cover 70 is located above the diaphragm 60. This protective cover 70 may be a non-pressure-resistant cover. The protecting cover is intended merely as a mechanical protection and should not make a hermetical seal. Thus the pressure below the protecting cover but above the diaphragm will be equal to the outside pressure.

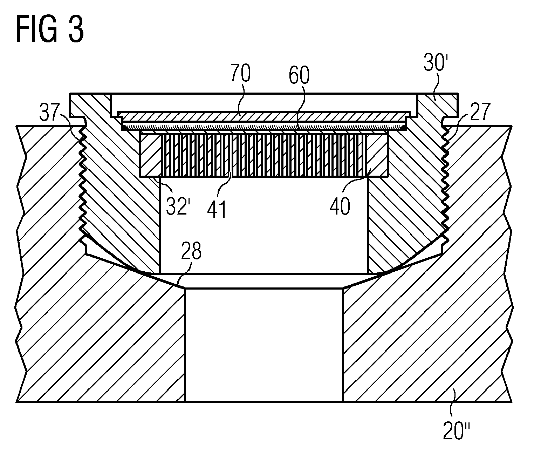

Fig. 3 shows a slightly different embodiment in which the housing 20" has a threaded portion 27 and the support element has a threaded portion 37. Both threaded portions interact in such a way that the support element 30' can be screwed into the connector housing 20". The housing furthermore comprises a stepped portion 28 which provides an inclined seat for the support element when it is completely screwed into the housing. The seat of the stepped portion 28 helps to withstand high external pressures as with a high external pressure the support element is pressed onto the seat in the housing 20".

In the embodiment shown in Figs. 1 to 3, the disk and the diaphragm have a constant width and have planar upper and lower surfaces. However, it is also possible hat the diaphragm has a varying thickness over the surface area where the thickness may be higher in portions of the diaphragm 60 in which through-holes 41 are provided. The disk may be fixedly connected to the support element in all the embodiments. In another embodiment, however, the disk may be a loose part which is only pressed onto the portion 32' by the high external pressure. When the disk is not welded to the support element, it may be ejected enabling even faster pressure relief after the sealing diaphragm has burst.

Even in the case where the holes in the pressure disk may be clogged, or if the pressure disk is not equipped with holes, the internal pressure will eject the pressure disk and thus rupture the diaphragm.

The present invention relates to a subsea canister with an improved mechanism which avoids that possible high internal pressures in a subsea canister can become a possible danger when extracted from a high pressure environment. The diaphragm, especially in its broken state can help to identify that a high internal pressure has already been relieved. Furthermore, the diaphragm is designed in such a way that it will break when the pressure inside the canister becomes higher than the pressure outside the canister, e.g. when the pressure difference is between 2 to 10 bar.

It should be understood that the materials used or the relation of the thickness of the diaphragm and the disk vary with the applied technical field. The higher the ambient pressure outside the canister will be, the smaller the openings and of the through-holes may be selected.

## Claims

1. A subsea canister (10) comprising:
- a disk (40) connected to a canister housing (20, 20', 20") in such a way that an inner disk surface (42) faces an interior space of the canister and outer disk surface (43) faces a space outside the canister,
- a support element (30, 30') fixedly connected to the canister housing (20, 20', 20"), wherein the disk is supported in the canister housing via the support element (30, 30'),
- a diaphragm (60) located on the outer disk surface (43), wherein the diaphragm is located on the outer disk surface (43) in such a way that the diaphragm (60) covers the disk wherein the diaphragm (60) and the support element (30, 30') are made of metal and the diaphragm is attached to the support element in such a way that a fully metallic seal is provided between the diaphragm (60) and the support element (30, 30').

2. The subsea canister according to claim 1, wherein the disk comprising at least one through-hole (41) through which the interior space of the canister is connected to the space outside the canister, wherein the diaphragm is located on the outer disk surface (43) in such a way that the diaphragm (60) covers the at least one through-hole (41) in the disk.

3. The subsea canister (10) according to claim 1 or 2, wherein the diaphragm (60) is located on the outer disk surface (43) of the disk in such a way that the diaphragm (60) rests on the disk (40).

4. The subsea canister (10) according to any of the preceding claims, wherein the diaphragm (60) is welded to the support element (30, 30').

5. The subsea canister (10) according to any of the preceding claims, wherein the diaphragm (60) is supported by the outer disk surface (43) in such a way that, if a pressure in the space outside the canister is larger than inside the canister, the diaphragm is pressed onto the outer disk surface (43).

6. The subsea canister (10) according to any of the preceding claims, wherein the disk (40) and the diaphragm (60) are designed such that that the disk can withstand a pressure difference between the inner disk surface (42) and the outer disk surface (43) without breaking that is at least 10 times higher than the pressure difference the diaphragm can withstand between its lower surface and its upper surface without breaking, preferably at least 30 times higher, more preferably at least 100 times higher.

7. The subsea canister (10) according to any of the preceding claims, wherein the support element (30, 30') and the canister housing (20, 20', 20") are made of metal, and the support element (30, 30') is attached to the canister housing in such a way that a fully metallic seal is provided between the support element and the canister housing.

8. The subsea canister (10) according to any of the preceding claims, wherein the support element (30, 30') comprises a threaded part (37) cooperating with a complementary threaded part (27) provided on the housing (20") to connect the support element (30') to the housing (20") of the canister.

9. The subsea canister according to any of the preceding claims, wherein the disk (40) is loosely supported on the support element (30, 30') in such a way that if the pressure in the interior space of the canister is smaller than in the space outside the canister, the disk (40) is pressed onto the support element, wherein if the pressure in the interior space of the canister is larger than in the space outside the canister and if the pressure difference between the pressure in the interior space and the space outside the canister is larger than a threshold, the disk (40) is expelled from the support element (30, 30').

10. The subsea canister (10) according to any of claims 1 to 8, wherein the disk (40) is fixedly connected to the support element (30, 30').

11. The subsea canister (10) according to any of claims 2 to 10, wherein the at least one through-hole (41) has a diameter in a range between 0,5 and 3 mm, preferably between 1 and 2 mm.

12. The subsea canister according to any of the preceding claims, wherein the disk (40) has a thickness that is between 8 to 20 times higher than the thickness of the diaphragm (60).

13. The subsea canister according to any of the preceding claims, further comprising a protective cover (70) which is arranged above a surface of the diaphragm (60) that is not facing the disk (40).

14. The subsea canister according to any of claims 2 to 13, wherein the diaphragm (60) has a varying thickness, wherein the part of the diaphragm (60) covering the at least one through-hole (41) has a greater thickness than other parts of the diaphragm.
